# EUROPEAN PATENT APPLICATION

(11) **EP 3 116 050 A1**
(43) Date of publication of application: **11.01.2017**
(21) Application number: 15758406.1
(22) Date of filing: 06.03.2015
(51) Int. Cl.: H01M 2/12, B01D 53/22, B01D 63/08, H01G 2/14, H01G 9/12, H01G 11/18, H01G 11/78, H01M 2/04

(54) **GAS-PERMEABLE MEMBER AND BREATHABLE CONTAINER**

(30) Priority: 06.03.2014 JP 2014044318
(71) Applicant: Nitto Denko Corporation, Ibaraki-shi, Osaka 567-8680 (JP)
(72) Inventor: ISHII, Kyouko, Ibaraki-shi Osaka 567-8680 (JP); YANO, Yozou, Ibaraki-shi Osaka 567-8680 (JP); FURUUCHI, Kouji, Ibaraki-shi Osaka 567-8680 (JP); FUKUOKA, Takahiro, Ibaraki-shi Osaka 567-8680 (JP); KIRA, Yoshiko, Ibaraki-shi Osaka 567-8680 (JP)
(74) Representative: Müller-Boré & Partner Patentanwälte PartG mbB
(86) International application number: PCT/JP2015/056720
(87) International publication number: WO 2015/133624

(57) **Abstract**

Provided is a gas permeable member including a gas permeable sheet configured to allow a gas to permeate therethrough and a holder configured to hold the gas permeable sheet, wherein the holder includes an insertion part into which the discharge part of the container body can be inserted, and a discharge opening through which the gas discharged into the holder from the discharge part inserted in the insertion part can be discharged to the outside of the holder, and the gas permeable sheet is held so as to intersect a gas flow path formed between the discharge opening and the discharge part inserted in the insertion part.

## Description

### CROSS-REFERENCE TO RELATED APPLICATION

This application claims priority to Japanese Patent Application No. 2014-044318, the disclosure of which is incorporated herein by reference in its entirety.

### FIELD

The present invention relates to a gas permeable member that allows a gas to permeate therethrough, particularly to a gas permeable member including a gas permeable sheet. Further, the present invention relates to a gas permeable container including the gas permeable member.

### BACKGROUND

When gases are generated within a sealed container, the internal pressure of the container increases, which may possibly result in damage or explosion of the container. For example, in electric storage devices such as secondary batteries, electrolytic capacitors, and electric double layer capacitors, a specific gas is generated during use within a container in which an electrode is housed, and therefore an increase in internal pressure may possibly cause damage or explosion of the container if the gas is not discharged to the outside of the container. Therefore, various structures to discharge the gas inside the container to the outside of the container have been proposed.

For example, as a container constituting an electric storage device, a container configured to house an electrode and an electrolyte, the container including a gas permeable part through which a gas permeates, thereby enabling circulation of the gas from inside to outside via the gas permeable part (hereinafter, referred to as a gas permeable container) has been proposed. In such a gas permeable container, the gas permeable part is formed by mounting a gas permeable sheet through which a gas permeates so as to cover a discharge hole configured to discharge the gas from the inside of a container body housing an electrode and an electrolyte. Thus, the gas generated inside the gas permeable container is configured to permeate through the gas permeable part (specifically, the gas permeable sheet), so as to be discharged to the outside of the gas permeable container (see Patent Literature 1).

Further, another gas permeable container that is constituted by mounting a gas permeable member through which a gas permeates on a discharge hole of a container body as described above has been proposed. The gas permeable member is constituted by a gas permeable sheet and a holder configured to hold the gas permeable sheet. In the holder, a gas flow hole that allows gas circulation is formed, and the gas permeable sheet is held to intersect the flow path of the gas within the gas flow hole. The gas permeable member is mounted in the discharge hole of the container body, so that the gas generated inside the gas permeable container is configured to be discharged to the outside of the container by passing through the gas flow hole and permeating through the gas permeable sheet.

As a gas permeable sheet as described above, a porous film made of polytetrafluoroethylene (PTFE) or the like, a foil strip made of metal (e.g., nickel, palladium-silver, and platinum), or a foil strip obtained by vapor deposition of platinum on a PTFE film, for example, are proposed (see Patent Literatures 1 and 2).

Note that, in such a gas permeable container including a gas permeable member as described above, the entirety of the gas permeable member is housed inside the discharge hole formed in the container body (specifically, the cover), and therefore the size of the gas permeable member (that is, the area of the gas permeable sheet) is limited depending on the size of the discharge hole. Therefore, the size of the gas permeable sheet cannot be set without limitation, and there may be cases where it is impossible to form a gas permeable member using a gas permeable sheet having a sufficient area to allow permeation of a gas generated within the container body.

### CITATION LIST

### Patent Literature

- Patent Literature 1:: WO 2009/1947 A
- Patent Literature 2:: JP 4280014 B2

### SUMMARY

### Technical Problem

It is therefore an object of the present invention to provide a gas permeable member that allows the area of a gas permeable sheet to be set without limitation by the size of a discharge hole formed in a container body. Further, it is another object thereof to provide a gas permeable container using the gas permeable member.

### Solution to Problem

A gas permeable member according to the present invention is configured to be mountable on a discharge part of a container body that houses members and that includes the discharge part having a discharge hole through which a gas inside the container body can be discharged, and is configured to allow the gas discharged from the discharge part to be discharged to the outside of the container body by allowing the gas to permeate therethrough. The gas permeable member includes: a gas permeable sheet configured to allow a gas to permeate therethrough and a holder configured to hold the gas permeable sheet, wherein the holder includes an insertion part into which the discharge part of the container body can be inserted, and a discharge opening through which the gas discharged into the holder from the discharge part inserted in the insertion part can be discharged to the outside of the holder, and the gas permeable sheet is held so as to intersect a gas flow path formed between the discharge opening and the discharge part inserted in the insertion part.

It is preferable that a diffusion space in which the gas discharged from the discharge part inserted in the insertion part is diffused to the outside of the opening of the discharge hole provided in the discharge part along one surface of the gas permeable sheet be formed between the discharge part inserted in the insertion part and the gas permeable sheet.

It is preferable that the insertion part include a locking structure configured to lock the discharge part of the container body along the insertion direction.

A gas permeable container includes: a container body configured to house members; and the gas permeable member according to any one of claims 1 to 3 which is mounted on the container body, wherein the container body includes a discharge part having a discharge hole through which a gas inside the container body can be discharged to the outside, and the discharge part is configured to allow the gas permeable member to be mounted thereon by being inserted into the holder through the opening located on one end side in the axial direction of the holder of the gas permeable member.

### BRIEF DESCRIPTION OF DRAWINGS

Fig. 1 is a perspective view showing a gas permeable member constituting a gas permeable container according to an embodiment of the present invention and a container body in which the gas permeable member is mounted and an enlarged view of cross section I-I.
Fig. 2 is a sectional perspective view showing the gas permeable member according to the embodiment.
Fig. 3 is a sectional perspective view showing the gas permeable member according to the embodiment mounted on the container body.
Fig. 4 is a sectional perspective view showing a gas permeable member according to another embodiment mounted on the container body.

### DESCRIPTION OF EMBODIMENTS

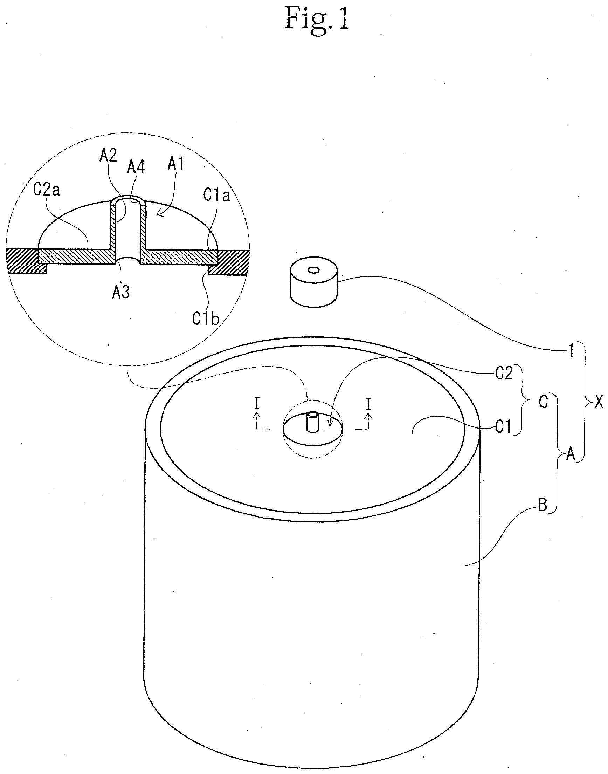

Hereinafter, an embodiment of the present invention will be described with reference to Figs. 1 to 3. In the following drawings, the same or corresponding portions are denoted by the same reference numerals, and the description thereof is not repeated.

As shown in Fig. 1, a gas permeable member 1 according to this embodiment is configured to be mountable on a container body A including an internal space to house other members. Specifically, the container body A includes a discharge part A1 configured to discharge a gas from the inside of the container body A, and the gas permeable member 1 is configured to be mountable on the discharge part A1. A gas permeable container X is formed by mounting the gas permeable member 1 on the container body A.

The discharge part A1 includes a discharge hole A2 that allows the internal space of the container body A and the outer space of the container body A to communicate with each other. The discharge hole A2 includes an opening (hereinafter, referred to also as inner opening) A3 formed to be in contact with the internal space of the container body A, and an opening (referred to also as outer opening) A4 formed to be in contact with the outer space of the container body A. The discharge hole A2 is configured so that a gas (specifically, a gas generated inside the container body A) entering into the discharge hole A2 through the inner opening A3 can be discharged through the outer opening A4. Further, the discharge part A1 is configured so as to have a portion on the outer opening A4 side projecting outwardly of the container body A from the region of the container body A in the vicinity of the discharge part A1. That is, the container body A is configured to have a region in the form of a projection with the discharge part A1 as the center of the region.

The container body A according to this embodiment will be described herein. The container body A is constituted by a container B including an internal space in which other members are housed and a cover C configured to close an opening of the container B. The cover C is constituted by a cover body member C1 formed so as to cover the opening of the container B, and a mounting member C2 including the discharge part A1 and configured to be mountable on the cover body member C1.

The cover body member C1 includes a mounting member housing hole C1a communicating with the internal space of the container B and configured to house the mounting member C2. Further, the cover body member C1 includes a housing hole projection C1b formed by allowing a part of the mounting member housing hole C1a to project inwardly of the mounting member housing hole C1a from the other portion. Meanwhile, the mounting member C2 is constituted by the discharge part A1, and a flange C2a provided extending from the discharge part A1. The flange C2a is formed at an end on the inner opening A3 side of the discharge part A1. When the mounting member C2 is housed in the mounting member housing hole C1a, the flange C2a contacts with the housing hole projection C1b, thereby locking the mounting member C2 to prevent it from moving toward the internal space side of the container body A. This allows the mounting member C2 to be mounted on the cover body member C1. In such a state, the discharge hole A2 is in communication with the internal space of the container body A (specifically, the container B).

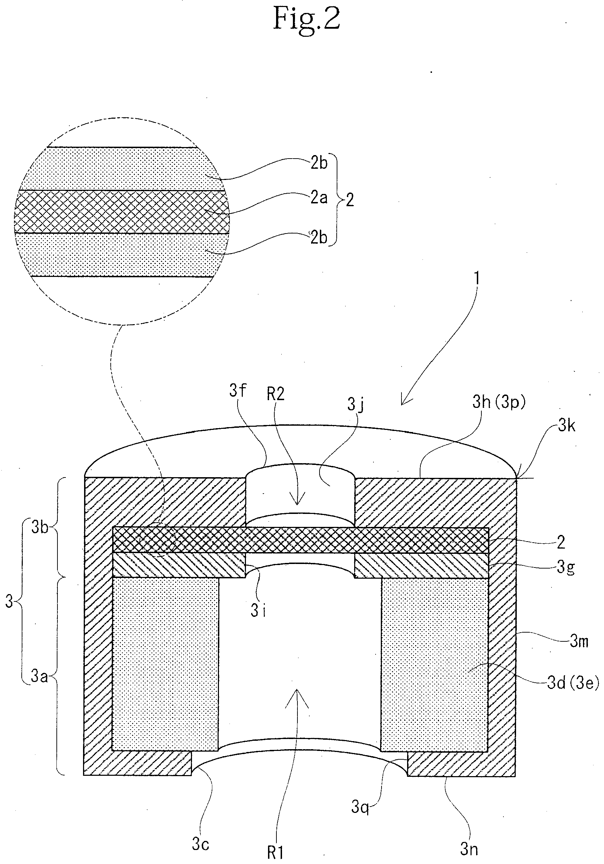

As shown in Fig. 2, the gas permeable member 1 that is mountable on the discharge part A1 of the container body A as described above includes a gas permeable sheet 2 that allows a gas to permeate therethrough and a holder 3 configured to hold the gas permeable sheet 2.

The gas permeable sheet 2 is constituted by laminating a plurality of sheet materials. Specifically, the gas permeable sheet 2 is constituted by laminating a selective permeable sheet 2a configured to allow a specific gas to selectively permeate therethrough and a non-selective permeable sheet 2b without selectivity for the specific gas. In this embodiment, the gas permeable sheet 2 is constituted by laminating the non-selective permeable sheet 2b on each of both sides of the selective permeable sheet 2a.

The selective permeable sheet 2a is configured to be selectively permeable to a specific gas, thereby allowing the specific gas to flow from one surface side to the other surface side. The gas to which the selective permeable sheet 2a is permeable is not specifically limited, and examples thereof include gases such as hydrogen, carbon dioxide, and oxygen.

As the selective permeable sheet 2a having selectivity for hydrogen gas, the selective permeable sheet 2a constituted by a sheet material containing a resin such as aromatic polyimide or a sheet material containing layers of hydrogen-permeable metals (such as vanadium, vanadium alloy, palladium alloy, niobium, and niobium alloy) can be mentioned, for example. Examples of the sheet material containing hydrogen-permeable metal layers include a sheet material (metal foil) composed only of a hydrogen-permeable metal layer and a sheet material formed by vapor deposition of a metal layer on a substrate layer such as a resin sheet. Examples of the selective permeable sheet 2a with selectivity for carbon dioxide include the selective permeable sheet 2a constituted by a sheet material made of silicone rubber, a PVA crosslinked sheet material, and a PEG crosslinked sheet material.

The non-selective permeable sheet 2b can be appropriately selected depending on the properties, etc., of the selective permeable sheet 2a to be laminated, but examples thereof include the selective permeable sheet 2a composed of a sheet material such as a porous film made of polytetrafluoroethylene (PTFE), ceramic, metal, resin, or the like. In particular, a porous film made of PTFE is preferable as a sheet material constituting the non-selective permeable sheet 2b because of its high water repellency, high heat resistance, and high chemical resistance.

The holder 3 is constituted by an insertion part 3a into which the discharge part A1 of the container body A can be inserted and a sheet holding part 3b configured to hold the gas permeable sheet. The holder 3 is configured to allow a gas discharged from the discharge part A1 inserted into the insertion part 3a to be discharged from the sheet holding part 3b side.

The insertion part 3a includes a discharge part housing space R1 configured to house the discharge part A1 and an insertion part opening 3c communicating with the discharge part housing space R1. Further, the insertion part 3a includes a locking structure 3d configured to be capable of locking the discharge part A1 of the container body A inserted through the insertion part opening 3c. The locking structure 3d is configured to be capable of locking the discharge part A1 to prevent the discharge part A1 from moving in a direction in which the discharge part A1 is pulled out of the insertion part 3a (hereinafter, referred to also as pull-out direction). In this embodiment, the locking structure 3d is formed to surround the outer circumference of the discharge part A1 with the insertion direction as an axis when the discharge part A1 is inserted in the insertion part 3a. That is, the discharge part housing space R1 is formed in the space surrounded by the locking structure 3d. Specifically, the locking structure 3d is constituted by an elastic member 3e that is formed into a cylindrical shape. When the discharge part A1 is inserted into the insertion part 3a, the locking structure 3d is configured so that the discharge part A1 is arranged inside the cylindrical elastic member 3e.

The sheet holding part 3b includes a discharge opening 3f through which the gas that has been discharged into the holder 3 from the discharge part A1 inserted in the insertion part 3a can be discharged to the outside of the holder 3, and a gas circulation space R2 formed between the discharge opening 3f and the discharge part A1 inserted in the insertion part 3a so as to allow circulation of the gas discharged from the discharge part A1 to the discharge opening 3f side. In the sheet holding part 3b, a gas permeable sheet is held so as to intersect the gas flow path formed in the gas circulation space R2.

Specifically, the sheet holding part 3b includes a pair of sandwich parts 3g and 3h configured to sandwich the gas permeable sheet 2, and the gas permeable sheet 2 is held by the holder 3 by being sandwiched by the pair of sandwich parts 3g and 3h. One sandwich part 3g is formed into a plate, and includes a through hole 3i configured to allow the spaces on one surface side and the other surface side to communicate with each other. The one sandwich part 3g is arranged between the gas permeable sheet 2 and the insertion part 3a (on one surface side of the gas permeable sheet 2). At this time, the internal space of the through hole 3i of the one sandwich part 3g and the discharge part housing space R1 are in communication with each other. The other sandwich part 3h is formed into a plate, and includes a through hole 3j configured to allow the spaces on one surface side and the other surface side to communicate with each other. The other sandwich part 3h is arranged on the other surface side of the gas permeable sheet 2. At this time, the internal space of the through hole 3j of the other sandwich part 3h and the internal space of the through hole 3i of the one sandwich part 3g are in communication with each other via the gas permeable sheet 2. The discharge opening 3f is constituted by the opening of the through hole 3j of the other sandwich part 3h (opening on the side that is not in contact with the gas permeable sheet 2).

Further, the holder 3 includes a frame material 3k housing the gas permeable sheet 2, the elastic member 3e, and the one sandwich part 3g. The frame material 3k is constituted by a cylindrical part 3m that is formed into a cylindrical shape, and a pair of extending parts 3n and 3p provided extending inwardly of the cylindrical part 3m from both ends in the axial direction of the cylindrical part 3m. One extending part 3n is formed into a plate, and includes a through hole 3q configured to allow the spaces on one surface side and the other surface side to communicate with each other. The internal space of the through hole 3q of the one extending part 3n and the discharge part housing space R1 are in communication with each other. That is, the insertion part opening 3c is formed at the end of the through hole 3q of the one extending part 3n. The other extending part 3p is formed into a plate to constitute the other sandwich part 3h. The gas permeable sheet 2, the elastic member 3e, and the one sandwich part 3g are housed in the space surrounded by the cylindrical part 3m and the pair of extending parts 3n and 3p, thereby forming the insertion part 3a and the sheet holding part 3b.

The material constituting the holder 3 as described above is not specifically limited, and examples of materials constituting the frame materials 3k and the one sandwich part 3g include metal materials and resin materials. Examples of the resin materials include thermoplastic resins such as polybutylene terephthalate (PBT), acrylonitrile butadiene styrene resin (ABS resin), and thermoplastic elastomer. Further, the material constituting the elastic member 3e is not specifically limited, but it is preferable to use a rubber material such as silicone rubber and ethylene-propylene-diene rubber (EPDM), for example.

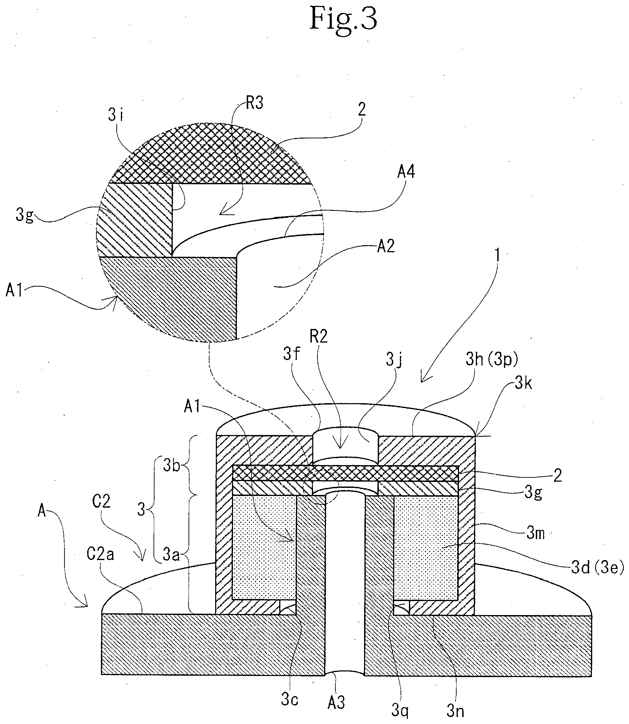

Next, the state of the gas permeable member 1 being mounted on the discharge part A1 of the container body A will be described. As shown in Fig. 3, the discharge part A1 of the container body A (specifically, the mounting member C2) is inserted into the insertion part 3a. This allows the discharge part A1 to be locked by the locking structure 3d (specifically, the cylindrical elastic member 3e) so as ot be prevented from moving along the insertion direction. Specifically, while the discharge part A1 is housed in the above-described discharge part housing space R1, the elastic member 3e elastically deforms, and thereby the outer circumferential surface of the discharge part A1 is elastically biased by the elastic member 3e. This allows friction to occur between the outer circumferential surface of the discharge part A1 and the inner circumferential surface of the cylindrical elastic member 3e in a direction in which the discharge part A1 is pulled out of the insertion part 3a (pull-out direction), so that the discharge part A1 is locked to the insertion part 3a. Further, the elastic member 3e is in close contact with the outer circumferential surface of the discharge part A1, and therefore the air tightness between the elastic member 3e and the discharge part A1 is ensured.

Further, a diffusion space R3 in which the gas discharged from the discharge part A1 is diffused to the outside of the outer opening A4 of the discharge part A1 along one surface of the gas permeable sheet 2 is formed between the discharge part A1 inserted in the insertion part 3a and the gas permeable sheet 2. The diffusion space R3 is formed inside the through hole 3i provided in the one sandwich part 3g. That is, the through hole 3i provided in the one sandwich part 3g is configured to have a cross section larger than the open face of the outer opening A4 of the discharge part A1.

Then, the discharge part A1 is inserted into the insertion part 3a as described above, thereby allowing the space inside the discharge hole A2 provided in the discharge part A1 to communicate with the space inside the through hole 3i provided in the one sandwich part 3g (the diffusion space R3). Further, the space inside the through hole 3i provided in the one sandwich part 3g (the diffusion space R3) communicates with the space inside the through hole 3j provided in the other sandwich part 3h via the gas permeable sheet 2.

In this way, a flow path of the gas discharged from the discharge part A1 is formed between the discharge part A1 and the discharge opening 3f, and therefore the gas discharged from the discharge part A1 is circulated toward the discharge opening 3f side via the gas permeable sheet 2 to be discharged to the outside of the gas permeable member 1 through the discharge opening 3f. Therefore, the gas generated inside the container body A is discharged to the outside of the container body A, thereby preventing an increase in internal pressure of the container body A.

There are cases where the gas permeable container X that is constituted by mounting the gas permeable member 1 on the container body A as described above is used for housing an electrode or the like, for example, as a member constituting an electric storage device such as a secondary battery, an electrolytic capacitor (aluminum electrolytic capacitor, etc.), and an electric double layer capacitor. In such a case, various gases are generated inside the gas permeable container X. For example, in the case where the gas permeable container X is used as a container constituting an aluminum electrolytic capacitor, hydrogen gas is generated. In the case where it is used as a container constituting an electric double layer capacitor, carbon dioxide gas is generated. Therefore, discharging only a specific gas to the outside of the gas permeable container X is enabled by selecting a material constituting the selective permeable sheet 2a corresponding to the type of gas generated within the gas permeable container X.

The above-described gas permeable member 1 is configured to be mountable on the discharge part A1 of the container body A that houses members and that includes the discharge part A1 having the discharge hole A2 through which the gas inside the container body A can be discharged, and is configured to allow the gas discharged from the discharge part A1 to be discharged to the outside of the container body A by allowing the gas to permeate therethrough. The gas permeable member 1 includes the gas permeable sheet 2 configured to allow the gas to permeate therethrough and the holder 3 configured to hold the gas permeable sheet 2, the holder 3 includes the insertion part 3a into which the discharge part A1 of the container body A can be inserted, and the discharge opening 3f through which the gas discharged into the holder 3 from the discharge part A1 inserted in the insertion part 3a can be discharged to the outside of the holder 3. The gas permeable sheet 2 is held by the holder 3 so as to intersect the flow path of the gas formed between the discharge opening 3f and the discharge part A1 when the discharge part A1 of the container body A is inserted into the insertion part 3a.

The diffusion space R3 that allows the gas discharged from the discharge part A1 inserted in the insertion part 3a to be diffused to the outside of the opening A3 of the discharge hole A2 provided in the discharge part A1 along the one surface of the gas permeable sheet 2 is formed between the discharge part A1 inserted in the insertion part 3a and the gas permeable sheet 2.

The insertion part 3a includes a locking structure configured to be locked to the discharge part A1 in the insertion direction of the discharge part A1 of the container body A.

The gas permeable container X includes the container body A that houses members and the gas permeable member 1 mounted on the container body A, the container body A includes the discharge part A1 having the discharge hole A2 through which the gas thereinside can be discharged to the outside, and the discharge part A1 allows the gas permeable member 1 to be mounted thereon by being inserted into the insertion part 3a provided in the holder 3 of the gas permeable member 1.

As described above, the gas permeable member and the gas permeable container according to the present invention allow the area of a gas permeable sheet to be set without limitation by the size of a discharge hole formed in a container body.

That is, the gas permeable sheet 2 is held by the holder 3 so as to intersect (cross) the gas flow path formed between the discharge opening 3f and the discharge part A1 inserted in the insertion part 3a, so that the gas discharged into the gas permeable member 1 (specifically, the gas discharged from the discharge part A1 inserted in the insertion part 3a) can be discharged through the discharge opening 3f by permeating through the gas permeable sheet 2.

Further, the gas permeable sheet 2 is held by the holder 3 so as to intersect (cross) the gas flow path formed between the discharge part A1 inserted in the insertion part 3a and the discharge opening 3f, so that the gas permeable sheet 2 is held outside the discharge hole A2 provided in the discharge part A1. This allows the area of the gas permeable sheet 2 to be set without limitation by the size of the discharge hole A2 as compared to the case where the gas permeable member 1 is mounted inside the discharge hole A2 provided in the discharge part A1.

Specifically, in the case where the gas permeable member 1 is mounted inside the discharge hole A2, as in the conventional technique, the area of the gas permeable sheet 2 needs to be set to be equal to or smaller than the sectional area of the discharge hole A2 or smaller. In contrast, when the gas permeable sheet 2 is held between the discharge part A1 inserted in the insertion part 3a and the discharge opening 3f, as in the present invention, the gas permeable sheet 2 is located outside the discharge hole A2, and therefore the area of the gas permeable sheet 2 can be set also to a size exceeding the sectional area of the discharge hole A2. That is, the area of the gas permeable sheet 2 can be set arbitrarily without the influence of the sectional area of the discharge hole A2.

Further, the diffusion space R3 is formed, so that the gas discharged from the discharge part A1 into the holder 3 is diffused to a region larger than the open face of the discharge hole A2. This allows the contact area of the gas permeable sheet 2 with the gas to be larger than the open face of the discharge hole A2 and therefore can increase the permeation amount of the gas that permeates through the gas permeable sheet 2 than in the case where the gas permeable member 1 is inserted into the discharge hole A2 (that is, in the case where the region of the gas permeable sheet 2 in contact with the gas is smaller than the open face of the discharge hole A2).

Further, the gas permeable member 1 can be prevented from being separated from the discharge part A1 of the container body A without intention by including the locking structure 3d. Specifically, the pressure of the gas discharged from the discharge part A1 of the container body A is applied to the gas permeable sheet 2, and therefore the entirety of the gas permeable member 1 is biased by the pressure of the gas from the discharge part A1 toward the discharge direction of the gas (direction opposed to the direction in which the discharge part A1 is inserted into the insertion part 3a). However, even if a force is applied to the gas permeable member 1 in a direction away from the discharge part A1 of the container body A (that is, even if a force such that the discharge part A1 is pulled out of the insertion part 3a is applied), the insertion part 3a includes the locking structure 3d, and thereby the discharge part A1 inserted in the insertion part 3a is locked to the insertion part 3a by such a biasing force, so that separation of the gas permeable member 1 out of the discharge part A1 of the container body A without intention can be prevented. In this way, the mounted state between the discharge part A1 and the gas permeable member 1 can be maintained.

It should be noted that the gas permeable member and the gas permeable container according to the present invention are not limited to the above-described embodiments, and various modifications can be made without departing from the gist of the present invention. Further, the above-described configurations, methods, or the like, of the plurality of embodiments may be optionally employed and combined (a configuration, method, or the like, according to one embodiment may be applied to a configuration, method, or the like, according to another embodiment), and it is a matter of course that configurations, methods, or the like according to various modifications described below may be optionally selected to be employed for the configurations, methods, or the like, according to the above-described embodiments.

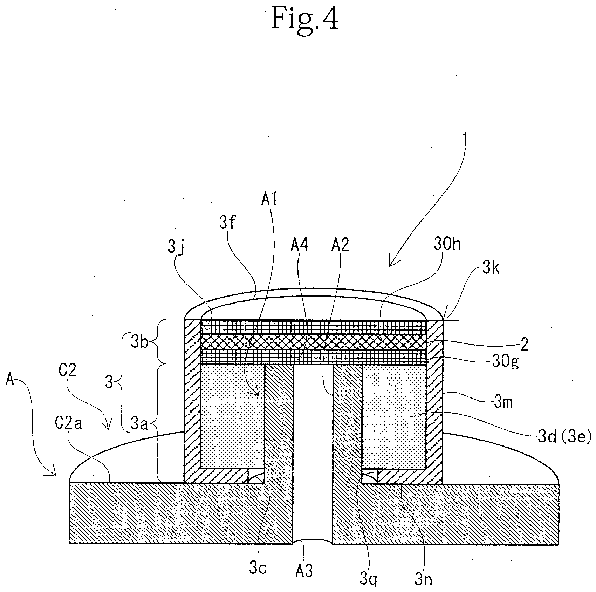

For example, in the above-described embodiments, the gas permeable sheet 2 is sandwiched by the pair of sandwich parts 3g and 3h formed into plates, but there is no limitation to this. For example, as shown in Fig. 4, the gas permeable sheet 2 may be sandwiched by a pair of sandwich parts 30g and 30h constituted by porous gas permeable bodies having pores communicating to each other, instead of the pair of sandwich parts 3g and 3h.

In such a case, the pair of sandwich parts 30g and 30h respectively include spaces with holes formed inside the pair of sandwich parts 30g and 30h three-dimensionally (in the vertical direction and the horizontal direction) communicating with each other. Therefore, the same diffusion space (not shown) as the diffusion space R3 of the above-described embodiments is formed by the internal space of one sandwich part 30g located between the gas permeable sheet 2 and the discharge part A1. Thus, the diffusion space is formed over the entirety of the contact region between the gas permeable sheet 2 and the one sandwich part 30g. Further, the entirety of the other sandwich part 30h is gas permeable, and therefore gas permeation is enabled over the entirety of the contact region between the gas permeable sheet 2 and the other sandwich part 30h.

As described above, the gas permeable sheet 2 is sandwiched by the pair of sandwich parts 30g and 30h, so that gas permeation can be enabled throughout the contact region of the gas permeable sheet 2 with the pair of sandwich parts 30g and 30h.

The porous gas permeable bodies constituting the pair of sandwich parts 30g and 30h are not specifically limited, and examples thereof include non-woven fabrics, and mesh or sponge-like porous materials.

Further, in the above-described embodiments, the locking structure 3d is constituted by the elastic member 3e, and the discharge part A1 is locked by the friction generated between the outer circumferential surface of the discharge part A1 and the inner circumferential surface of the elastic member 3e, but there is no limitation to this as long as the air tightness between the gas permeable member and the discharge part A1 is ensured. For example, the discharge part A1 and the holder 3 may be threadedly engaged with each other, or may be fitted to each other by projections and recesses. Specifically, the configuration may be such that projections and recesses formed on a surface of the insertion part 3a forming the discharge part housing space R1 and projections and recesses formed on the outer surface of the discharge part A1 can be threadedly engaged or fitted to each other.

Further, in the above-described embodiments, the gas permeable sheet 2 is constituted by a plurality of sheet materials, but there is no limitation to this. For example, the gas permeable sheet 2 may be constituted by laminating sheet materials only of the same kind, or the gas permeable sheet 2 may be constituted by one piece of sheet material alone.

### REFERENCE SIGNS LIST

- 1:: Gas permeable member
- 2:: Gas permeable sheet
- 2a:: Selective permeable sheet
- 2b:: Non-selective permeable sheet
- 3:: Holder
- 3a:: Insertion part
- 3b:: Sheet holding part
- 3c:: Insertion part opening
- 3d:: Locking structure
- 3e:: Elastic member
- 3f:: Discharge opening
- 3k:: Frame material
- 3m:: Cylindrical part
- X:: Gas permeable container
- A:: Container body
- A1:: Discharge part
- A2:: Discharge hole
- A3:: Inner opening
- A4:: Outer opening
- B:: Container
- C:: Cover
- C1:: Cover body member
- C1a:: Mounting member housing hole
- C1b:: Housing hole projection
- C2:: Mounting member
- C2a:: Flange
- R1:: Discharge part housing space
- R2:: Gas circulation space
- R3:: Diffusion space

## Claims

1. A gas permeable member configured to be mountable on a discharge part of a container body that houses members and that includes the discharge part having a discharge hole through which a gas inside the container body can be discharged, and configured to allow the gas discharged from the discharge part to be discharged to the outside of the container body by allowing the gas to permeate therethrough, the gas permeable member comprising:
a gas permeable sheet configured to allow a gas to permeate therethrough; and
a holder configured to hold the gas permeable sheet, wherein
the holder comprises an insertion part into which the discharge part of the container body can be inserted, and a discharge opening through which the gas discharged into the holder from the discharge part inserted in the insertion part can be discharged to the outside of the holder, and
the gas permeable sheet is held so as to intersect a gas flow path formed between the discharge opening and the discharge part inserted in the insertion part.

2. The gas permeable member according to claim 1, wherein
a diffusion space in which the gas discharged from the discharge part inserted in the insertion part is diffused to the outside of the opening of the discharge hole provided in the discharge part along one surface of the gas permeable sheet is formed between the discharge part inserted in the insertion part and the gas permeable sheet.

3. The gas permeable member according to claim 1 or 2, wherein
the insertion part includes a locking structure configured to lock the discharge part of the container body along the insertion direction.

4. A gas permeable container comprising:
a container body configured to house members; and
the gas permeable member according to any one of claims 1 to 3 which is mounted on the container body, wherein
the container body includes a discharge part having a discharge hole through which a gas inside the container body can be discharged to the outside, and
the discharge part is configured to allow the gas permeable member to be mounted thereon by being inserted into the holder through the opening located on one end side in the axial direction of the holder of the gas permeable member.
